# EUROPÄISCHE PATENTSCHRIFT

(11) **EP 0 524 142 B1**
(45) Veröffentlichungstag und Bekanntmachung des Hinweises auf die Patenterteilung: **02.10.1996**
(21) Anmeldenummer: 92810508.9
(22) Anmeldetag: 03.07.1992
(51) Int. Cl.: H02H 3/33

(54) **Elektronische Auslöseschaltung für einen FI-Schutzschalter**
Electronic trip circuit for earth leakage circuit breaker
Circuit de déclenchement électronique pour un disjoncteur de fuite à la terre

(30) Priorität: 12.07.1991 CH 2088/91
(43) Veröffentlichungstag der Anmeldung: 20.01.1993
(73) Patentinhaber: CMC Carl Maier + Cie AG, CH-8201 Schaffhausen (CH)
(72) Erfinder: Oostlander, Pieter, CH-8212 Neuhausen am Rheinfall (CH); Schneider, Gerhard, W-7712 Blumberg (DE)
(74) Vertreter: Patentanwälte Breiter + Wiedmer AG

(56) Entgegenhaltungen:
- EP-A- 0 113 026
- EP-A- 0 285 594
- DE-A- 3 127 331
- DE-A- 3 409 603
- DE-C- 3 917 478
- US-A- 3 700 967

## Beschreibung

Die Erfindung bezieht sich auf eine netzspannungsunabhängige elektronische Schaltung nach dem Oberbegriff von Patentanspruch 1, welche eine verzögerte Auslösung eines FI-Schutzschalters bewirkt.

Fehlerstromschutzschalter, kurz FI-Schutzschalter genannt, umfassen Schutz-, Überwachungs- und Meldeschalter, insbesondere für Fehlerstromschutz-, Fehlerstromüberwachungs- und Fehlerstrommeldeschalter, und sind seit mehr als 30 Jahren bekannt. Sie verhüten Elektrounfälle und Brände in ein Wechselstromnetz umfassenden elektrischen Anlagen mit Wechselströmen und pulsierenden Gleichströmen, wo FI-Schutzschalter insbesondere der Detektierung von Fehlerwechselströmen und pulsierenden Fehlergleichströmen dienen.

Ein FI-Schutzschalter überwacht ständig die elektrische Installation und schaltet ab, bevor ein zur Erde abfliessender Strom gefährlich werden kann. Ein solcher Strom wird als Fehlerstrom bezeichnet und bedeutet in jedem Fall eine Gefahr für Menschen, Tiere, Apparate und/oder Objekte. Auf nationaler und internationaler Basis sind Normwerte anerkannt, welche die maximal zulässige Auslösezeit eines FI-Schalters allgemein oder abhängig von der Stromstärke festlegen. So liegt beispielsweise die allgemeine europäische Norm für die Auslösezeit bei maximal 300 msec.

In einer fehlerfreien Installation, d.h. ohne zur Erde abgeleiteten Fehlerstrom, fliesst der Betriebsstrom vom Netz durch den Summenstromwandler, kurz auch Stromwandler genannt, zum Verbraucher und von dort wieder durch den Stromwandler zurück zum Netz. Die geometrische Summe der zu- und abfliessenden Ströme im Wandler ist gemäss dem ersten Kirchhoff'schen Gesetz gleich Null.

Wird infolge eines Defektes ein Fehlerstrom zur Erde abgeleitet, ist der zum Verbraucher hinfliessende Strom um diesen Anteil grösser als der zurückfliessende. Der Differenzstrom induziert im Stromwandler ein magnetisches Feld. Dadurch wird in der Sekundärwicklung ein Strom erzeugt, welcher im Endeffekt den Magnetauslöser zum Ansprechen und den FI-Schutzschalter nach der Auslösezeit des Fehlerstromauslösers und der Eigenzeit des Schaltmechanismus, insgesamt meist unter 10 msec, zur allpoligen Abschaltung bringt.

Der vermehrte Einsatz von elektronischen Geräten in Installationen, bedingt durch die notwendige Entstörung dieser Geräte, führt beim Ein- und Ausschalten zu stets häufigeren Fehlauslösungen von FI-Schutzschaltern. Mit den Entstörkapazitäten, welche in elektronischen Geräten vorhanden sind, wird bei deren Auf- oder Entladen ein kurzzeitiger Ableitstrom erzeugt, welcher den FI-Schutzschalter zum Auslösen bringt, obwohl der Ableitstrom kein gefährlicher Fehlerstrom im oben erwähnten Sinne ist.

Die DE, A1 3409603 beschreibt einen FI-Schutzschalter mit einer Auslöseeinrichtung zwischen ihren Anschlussleitungen. Die Auslöseeinrichtung, ein gewöhnliches Relais, ist mit einem Tiefpass beschaltet, welcher hochfrequente Spannungen kurzschliesst.

Die EP, A1 0113026 sieht keinen Pass vor, ein als FI-Schutzschalter ausgestalteter Universalfrequenzschalter hat im Sekundärkreis, zwischen den Summenstromwandler und der Auslöseeinrichtung, eine eingeschaltete Gleichrichteranordnung, z.B. eine Villard- oder Delonschaltung.

Im Hinblick auf eine Verzögerung der Auslösezeit, welche weder in der DE, A1 3409603 noch in der EP, A1 0113026 erwähnt oder angedeutet wird, hat sich beispielsweise die DE, C2 3127331 zum Ziel gesetzt, eine elektronische Auslöseschaltung für FI-Schutzschalter zu schaffen, die einen geringen Energiebedarf zur Auslösung hat und erst nach dem Ablauf einer vorgegebenen, allenfalls stromabhängigen Verzögerungszeit, die auch bei sehr grossen Fehlerströmen eine untere Grenze nicht unterschreitet, auslöst. Dieses Ziel wird im Zusammenwirken folgender Bauteile erreicht:
- Eine als Gleichrichterschaltung ausgebildete Brückenschaltung mit Halbleitern, welche beim Überschreiten einer Spannungsschwelle auch in der Sperrichtung durchlässig werden
- Ein aus einem Konstantstrom-Regelglied bestehendes Widerstandsglied
- Eine Hilfsspannung eines Schwellwert-Schalters, welche dem Einstellen der Ansprechschwelle dient und eine feste Referenzspannung hat.

Mit der elektronischen Auslöseschaltung gemäss der DE, C2 3127331 kann das unerwünschte Abschalten von FI-Schutzschaltern verhindert werden, womit ein wesentliches Ziel erreicht ist. Das verzögerte Abschalten erfolgt nahe bei den oben erwähnten, normierten, maximal zulässigen Zeiten bis zur Auslösung, bleibt jedoch immer darunter.

Die EP, A1 0285594 geht von einem Fehlerstromschutzschalter mit einer netzspannungsabhängigen oder netzspannungsunabhängigen Elektronikschaltung aus, welche eine Auslösezeit hat, die unabhängig vom Fehlerstrom immer grösser als die Dauer einer Netzspannungshalbwelle ist. Auf dieser Voraussetzung basierend werden den Vorschriften entsprechende Gesamtausschaltzeiten des Fehlerstromschutzschalters nach dem Überschreiten des Auslösungswertes des Fehlerstromes festgelegt. Weiter wird in allgemeiner Weise dargelegt, dass eine Elektronikschaltung eine netzspannungsunabhängige Speicherschaltung, umfassend eine Gleichrichterschaltung, einen Speicherkondensator und ein spannungsabhängiges Schaltorgan, sein oder als netzspannungsabhängiges Schaltorgan in den Auslösekreis mit der elektronischen Verstärkerschaltung zur Fehlerstromerfassung und dem Fehlerstromauslöser geschaltet sein kann.

Die US,A1 3700967 zeigt eine weitere Variante einer elektronischen Auslöseschaltung für einen FI-Schutzschalter. Diese Schaltung ist netzabhängig, sie weist keine gesonderte Verzögerungseinrichtung auf. Die Empfindlichkeit der Schaltung soll im Frequenzbereich von 60 Hz erhöht, unter- und oberhalb davon erniedrigt werden, was als Bandpass bezeichnet wird. Dazu ist der Verstärker mit einem Netzwerk von Transistoren , Widerständen und Kondensatoren bestückt. Ein dem Spannungsdetektor vorgeschalteter Kondensator C6 wird langsam aufgeladen.

Ein Energiespeicher-Fehlerstromschutzschalter gemäss der DE,C1 3917478 hat eine von der Netzspannung unabhängige elektronische Auslöseschaltung mit einem Speicherkondensator für die zur Betätigung des Auslösers benötigte Energie. Nach Seite 4, Zeile 33, bildet dieser Speicherkondensator zusammen mit einem ohmschen Widerstand ein RC-Glied. Parallel zum ohmschen Widerstand des RC-Gliedes ist eine Diode geschaltet. Weiter ist der Summenstromwandler so ausgelegt, dass er beim Nenn-Fehlerstrom weit unterhalb der Sättigung seines Kerns arbeitet.

Die Erfinder der vorliegenden Anmeldung haben sich die Aufgabe gestellt, eine bei hohen und tiefen Frequenzen unempfindliche elektronische Auslöseschaltung der eingangs genannten Art zu schaffen, welche bei genau aufeinander abgestimmten oder abstimmbaren elektronischen Bauteilen eine kurzzeitige, weit unter der Gefahrengrenze für die maximale Auslösezeit eines FI-Schalters liegende, definierte Ansprechzeiten erlaubt, wobei die Auslöseschaltung aus wenigen kleinen, auf engem Raum unterbringbaren elektronischen Bauteilen bestehen und eine sehr kleine Leistung aufnehmen soll.

Die Aufgabe wird erfindungsgemäss nach dem Kennzeichen von Patentanspruch 1 gelöst. Spezielle und weiterbildende Ausführungsformen der Erfindung sind Gegenstand von abhängigen Patentansprüchen.

Mit der erfindungsgemässen elektronischen Schaltung führen Fehlerströme nicht zur Auslösung von FI-Schutzschaltern, welche während weniger als der halben Periodendauer des Netzstromes auftreten. Bei einer Frequenz von 50 Hz entspricht dies Werten unter 10 msec. Dieser Zeitraum ist nur ein Bruchteil der gemäss internationaler Normen zulässigen maximalen Abschaltzeit für FI-Schutzschalter.

Von wesentlicher Bedeutung ist die Bildung eines dem Spannungsvervielfacher vorgeschalteten Bandpasses aus elektronischen Bauteilen. Die wirksame Induktivität und parasitäre Kapazität der Sekundärwicklung und eine parasitäre Kapazität eines allfälligen Dämpfungsgliedes sind erwünscht, sie erlauben kleiner dimensionierte Kapazitäten. Die Sekundärwicklung des Stromwandlers ist vorzugsweise so dimensioniert, dass die Sekundärwicklungs-Induktivität mit ihrer parasitären Sekundärwicklungs-Kapazität einen zwischen halber und doppelter Netzfrequenz abgestimmten Parallelschwingkreis bildet.

Die elektronische Schaltung kann im Bandpass ein spannungsabhängiges Dämpfungsglied oder einen dem Bandpass nachgeschalteten Spannungsstabilisator enthalten, nach einer dritten Variante ist jedoch auch die Anordnung eines Dämpfungsglieds und eines Spannungsstabilisators möglich. Im letzteren Fall können Dämpfungsglied und Spannungsstabilisator aus gleichen oder verschiedenen elektronischen Bauteilen bestehen. Diese Bauteile sind vorzugsweise antiseriell geschaltete Zehnerdioden, ein Varistor, ein VDR-Widerstand (spannungsabhängiger Widerstand), antiseriell geschaltete, unipolare Trans-Sorb-Dioden (unipolare Suppressor-Dioden) oder bipolare Trans-Sorb-Dioden (bipolare Suppressor-Dioden).

Die Spannungsschwelle des Spannungsdetektors ist beispielsweise mittels eines Spannungsteilers einstellbar.

Die wenigen, kleinen Bauteile der elektronischen Auslöseschaltung können nach einer ersten Variante auf eine Leiterplatte in SMD-Technik (SMD = Surface Mounting Device) untergebracht werden, welche beispielsweise 22 x 12 mm misst. Nach einer zweiten Variante, welche noch platzsparender ist, können die Halbleiterbauelemente in einem Chip integriert sein und dieser mit weiteren elektronischen Bauteilen auf einem kleindimensionierten Träger montiert sein.

Die erfindungsgemässe elektronische Auslöseschaltung arbeitet wie folgt:

Der Stromwandler erfasst einen auftretenden Fehlerstrom und wandelt diesen in eine weiter zu verarbeitende Spannung um. Mit seiner hohen Sekundär-Windungszahl und der dadurch bedingten Induktivität wird mit einem parallel geschalteten Kondensator ein Schwingkreis gebildet. Dieser ist so dimensioniert, dass sowohl bei einem sinusförmigen Strom als auch bei einem allfälligen Phasenanschnitt eine hohe Empfindlichkeit erreicht wird. Die so gewonnene Spannung wird, unter Benutzung weiterer elektronischer Bauteile, einem an sich bekannten Spannungsvervielfacher zugeführt. Der an diesen Spannungsvervielfacher angeschlossene Energiespeicher-Kondensator ist so bemessen, dass die Spannungsquelle, die Sekundärwicklung des Stromwandlers, einerseits nicht übermässig belastet wird, andererseits aber genügend Energie für die Auslösung des Magnetauslösers zur Verfügung stellt.

Die sich im Energiespeicher-Kondensator mit der Ladung aufaddierende Spannung wird mit einem Spannungsdetektor überwacht, der beim Erreichen einer festeingestellten oder einstellbaren Spannungsschwelle plötzlich seine Ausgangsspannung ändert und ein Spannungssignal an ein Schaltelement im Entladekreis des Energiespeicher-Kondensators abgibt. Dabei belastet der kleindimensionierte Spannungsdetektor den Energiespeicher-Kondensator nur in sehr geringem Ausmass. Das an das Schaltelement abgegebene Spannungssignal macht dieses sprunghaft leitend, der Energiespeicher-Kondensator kann die gespeicherte Energiemenge schlagartig über den Magnetauslöser entladen. Dieser wirkt seinerseits auf das Schaltschloss des FI-Schutzschalters ein und gibt dieses zur Auslösung frei, der Verbraucherstrom ist unterbrochen.

Alle verwendeten elektronischen Bauteile sind so dimensioniert und aufeinander abgestimmt, dass ihre Kombination beim Aufbau eines kurzzeitigen Fehlerstromes die eingangs beschriebene kleine, aber notwendige zeitliche Verzögerung des Abschaltens durch den FI-Schutzschalter bewirkt.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 ein Schaltbild einer Verzögerungsschaltung,
- Fig. 2 ein Blockdiagramm einer Verzögerungsschaltung,
- Fig. 3 einen Spannungsverdoppler nach Delon/Greinacher,
- Fig. 4 einen Spannungsverdreifacher nach Witka,
- Fig. 5 einen Spannungsverdoppler nach Villard,
- Fig. 6 einen Spannungsverdreifacher nach Villard, und
- Fig. 7 einen Spannungsverdoppler für unsymmetrische Wechselspannungen.

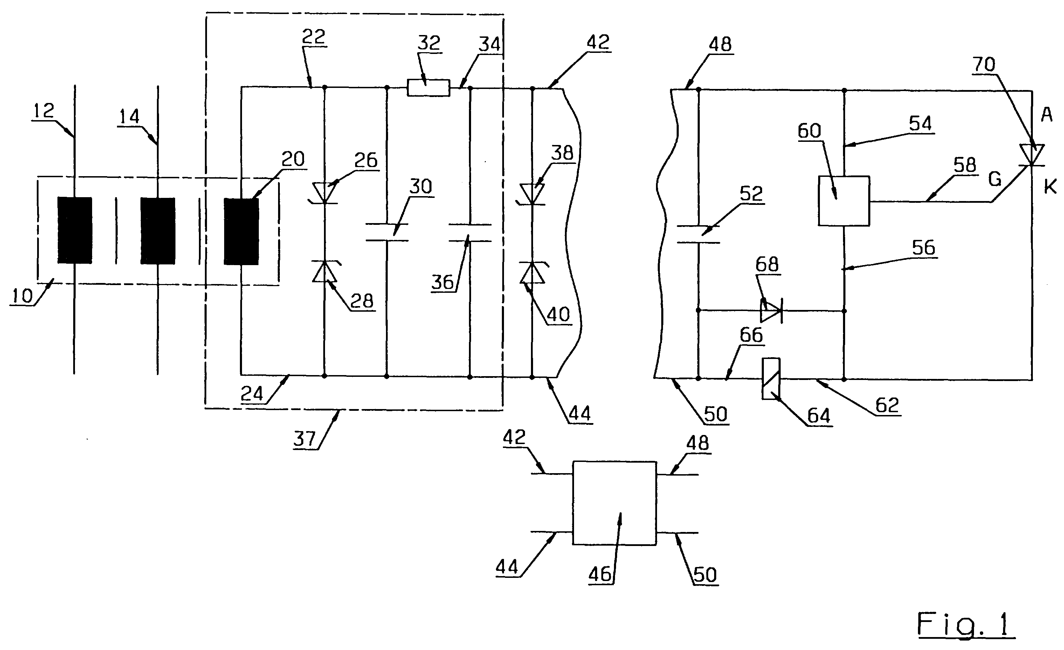

Das in Fig. 1 dargestellte Schaltbild einer Verzögerungsschaltung zeigt einen an sich bekannten, deshalb nicht näher dargestellten FI-Schutzschalter mit einem im wesentlichen ringförmig angeordneten Stromwandler 10, durch welchen ein Phasenleiter 12 und ein Nulleiter 14 geführt sind. Die Primärwindungszahl des hochpermeabilen Stromwandlers beträgt also 1, die Sekundärwindungszahl dagegen ist sehr hoch, sie liegt vorzugsweise über 1'000, beispielsweise bei etwa 1'200. Bei einem Fehlerstrom liefert der Stromwandler 10 die für die Auslösung des FI-Schutzschalters notwendige Energie.

Die Anschlüsse 22, 24 der Sekundärwicklung 20 sind vorerst mit den Anschlüssen eines aus zwei antiseriell geschalteten Zehnerdioden bestehenden Dämpfungsglieds 26, 28 verbunden. Dieses bewirkt bei hohen Fehlerströmen eine Begrenzung der Sekundärspannung des Stromwandlers 10, damit keine nachfolgenden elektronischen Bauteile durch Überspannung beschädigt werden können.

Weiter sind die Anschlüsse 22, 24 mit einem ersten Kondensator 30 verbunden, welcher im Zusammenwirken mit der Induktivität der Sekundärwicklung 20 des Stromwandlers 10 einen Schwingkreis bildet, der so dimensioniert ist, dass bei sinusförmigen Fehlerströmen eine optimale Empfindlichkeit erreicht wird. Die sinusförmigen Fehlerströme können auch einen Phasenanschnitt haben.

Der Anschluss 22 der Sekundärwicklung 20 führt zu einem Kopplungswiderstand 32 mit einem Anschluss 34, welcher über einen zweiten Kondensator 36 mit dem Anschluss 24 verbunden ist.

Die elektronischen Bauteile 26, 28, 30, 32 und 36 bilden mit der Sekundärwicklung 20 des Stromwandlers 10 einen Bandpass 37.

Ein im vorliegenden Fall aus zwei antiseriell geschalteten Zehnerdioden bestehender, bipolarer Spannungsstabilisator 38, 40 ist einends mit dem Anschluss 34 des Kupplungswiderstands 32 und andernends mit dem Anschluss 24 der Sekundärwicklung 20 verbunden.

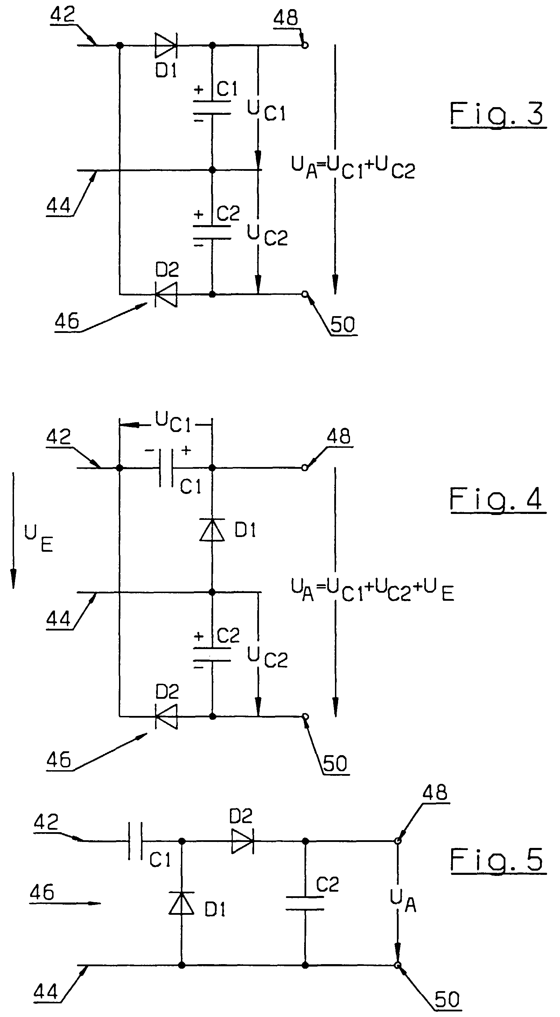

Die Anschlüsse 42, 44 eines Spannungsvervielfachers 46, von welchem in den Fig. 3 bis 7 spezielle Ausführungsvarianten dargestellt sind, sind ihrerseits mit dem Anschluss 34 des Kopplungswiderstandes 32 und mit dem Anschluss 24 der Sekundärwicklung 20 verbunden. Die beiden anderen Anschlüsse 48, 50 des Spannungsvervielfachers 46 sind mit einem Energiespeicher-Kondensator 52 verbunden. Dieser ist so dimensioniert, dass die Spannungsquelle, der Stromwandler 10, nicht übermässig belastet wird. Andererseits muss der Energiespeicher-Kondensator 52 genügend Energie für die Auslösung des nachstehend näher beschriebenen Magnetauslösers 64 eines FI-Schutzschalters zur Verfügung stellen.

Ein Anschluss 54 eines Spannungsdetektors 60 ist mit dem Anschluss 48 des Spannungsvervielfachers 46 und mit dem anodischen Eingang A eines Schaltelementes 70 verbunden. Ein anderer Anschluss 56 des Spannungsdetektors 60 ist mit einem Anschluss 62 eines Magnetauslösers 64, der Kathode einer Freilaufdiode 68 und dem kathodischen Ausgang K des Schaltelementes 70 verbunden. Ein Detektorausgang 58 des Spannungsdetektors 60 ist mit dem Steueranschluss G (Gate) des Schaltelementes 70 verbunden. Ein Anschluss 66 des auch Auslöserelais genannten Magnetauslösers 64 und die Anode der Freilaufdiode 68 sind über die Anschlüsse 50, 24 und den Spannungsvervielfacher 46 mit der Sekundärwicklung 20 des Stromwandlers 10 verbunden.

Der Energiespeicher-Kondensator 52, das Schaltelement 70 und der Magnetauslöser 64 bilden mit den entsprechenden Anschlüssen den Entladekreis.

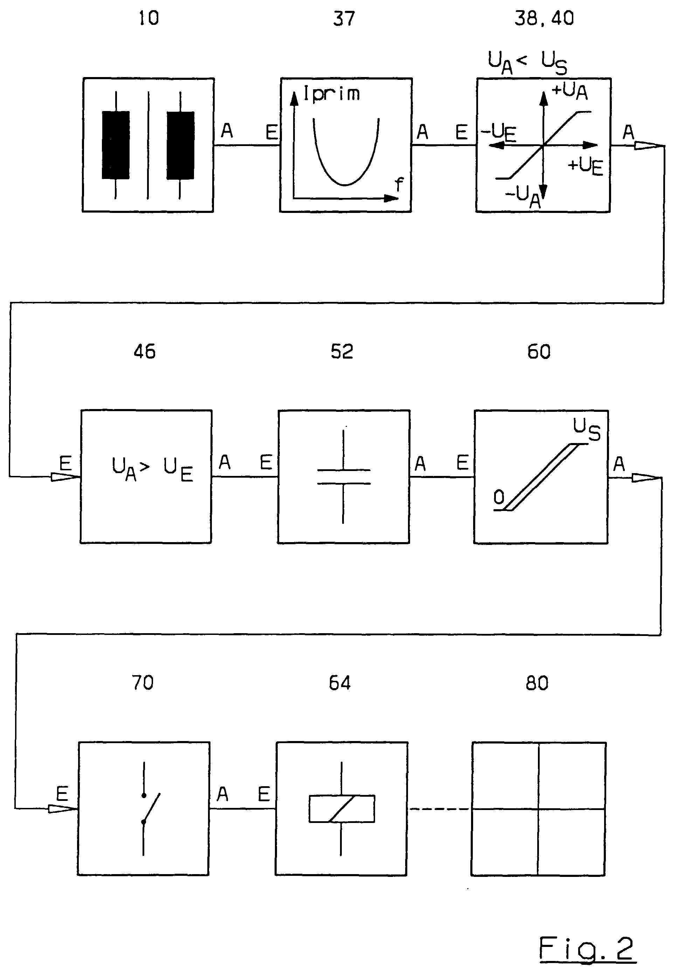

Eine Verzögerungsschaltung ist in einem Blockdiagramm gemäss Fig. 2 summarisch dargestellt. A bedeutet generell Ausgang, E Eingang. Der im Stromwandler 10 induzierte Auslösestrom fliesst zum Bandpass 37, welcher durch den gegen die Frequenz f aufgetragenen Primärstrom Iprim charakterisiert ist. Im bipolaren Spannungsstabilisator 38, 40 bleibt die Ausgangsspannung U_{A} kleiner als die Schaltspannung U_{S}, was in üblicher Form stilisiert dargestellt ist. Im Spannungsvervielfacher 46 wird die Ausgangsspannung U_{A} auf wenigstens das Doppelte der Eingangsspannung U_{E} erhöht, die Energie im Energiespeicher-Kondensator 52 gespeichert. Im Spannungsdetektor 60 steigt die Spannung von Null auf die Schaltspannung U_{S}, beim Erreichen der Spannungsschwelle ändert die auf das Schaltelement 70 einwirkende Ausgangsspannung plötzlich. Beim Zünden des Schaltelements 70 entlädt sich der Energiespeicher-Kondensator 52 über den Magnetauslöser 64. Bei der Entladung wirkt dieser mechanisch auf das Schaltschloss 80 eines FI-Schutzschalters ein, was mit einer gestrichelten Linie dargestellt ist.

Die in den Fig. 3 bis 7 dargestellten Gleichrichteranordungen, Spannungsvervielfacher 46 mit den Anschlüssen 42, 44, sind an sich bekannt und werden deshalb nicht im Detail beschrieben.

Der Spannungsverdoppler nach Delon/Greinacher gemäss Fig. 3 umfasst zwei Kondensatoren C1, C2 mit den Spannungsabfällen U_{C1} und U_{C2} und die Dioden D1 und D2.

Der Spannungsverdreifacher nach Witka gemäss Fig. 4 und der Spannungsverdoppler nach Villard gemäss Fig. 5 weisen die gleichen elektronischen Bauteile auf, die Spannungsabfälle sind ebenfalls mit U_{C1} und U_{C2} bezeichnet.

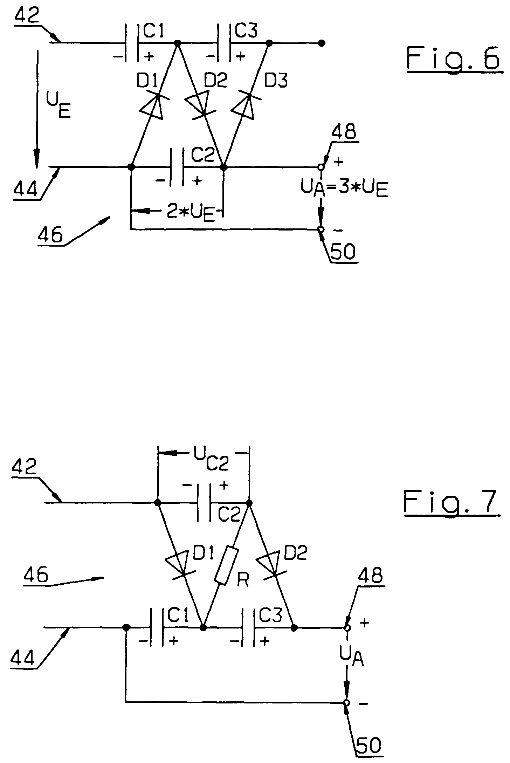

Der Spannungsverdreifacher nach Villard gemäss Fig. 6 hat drei Kondensatoren C1, C2 und C3 und drei Dioden D1, D2 und D3.

Der Spannungsverdoppler für unsymmetrische Wechselspannungen nach Fig. 7 umfasst im wesentlichen drei Kondensatoren C1, C2 und C3, zwei Dioden D1, D2 und einen Widerstand R.

## Patentansprüche

1. Netzspannungsunabhängige elektronische Schaltung für einen FI-Schutzschalter mit einem Fehlerströme erfassenden Stromwandler (10), welche Schaltung zur Auslöseverzögerung einen mit der Sekundärwicklung (20) des Stromwandlers (10) gebildeten Bandpass (37), eine Gleichrichterschaltung, einen Energiespeicher-Kondensator (52), einen Schwellwert-Schalter für die Spannung und einen den Energiespeicher-Kondensator (52) entladenden, auf das Schaltschloss (80) des FI-Schutzschalters einwirkenden Magnetauslöser (64) umfasst, wobei die Auslöseverzögerung unabhängig von der Primärdurchflutung immer grösser als die halbe Periodendauer des zu überwachenden Netzes ist und einen von der Frequenz des zu überwachenden Netzes abhängigen Ansprechstrom hat,
dadurch gekennzeichnet, dass
die Sekundärwicklung (20), ein erster Kondensator (30), ein zweiter Kondensator (36) und ein Kopplungswiderstand (32) mit entsprechenden Anschlüssen den Bandpass (37) bilden, dessen Spannung über einen gleichrichtenden Spannungsvervielfacher (46) einem Entladekreis aus dem Energiespeicher-Kondensator (52), dem Magnetauslöser (64) und einem Schaltelement (70) zugeführt ist, ein Ausgang eines Spannungsdetektors (60) für den vorgeschalteten Energiespeicher-Kondensator (52) mit dem Steueranschluss (G) eines Schaltelementes (70) verbunden ist, welches bei einer Ansteuerung durch den Spannungsdetektor (60) den Energiespeicher-Kondensator (52) entlädt, wobei die Amplitude der Ausgangsspannung des Bandpasses (37) mittels eines im Bandpass (37) dem ersten Kondensator (30) vorgeschalteten Dämpfungsgliedes (26, 28) und/oder eines dem zweiten Kondensator (36) nachgeschalteten bipolaren Spannungsstabilisators (38, 40) auf einen unterhalb der Ansprechgrenze des Spannungsdetektors (60) liegenden Wert begrenzt ist.

2. Elektronische Schaltung nach Anspruch 1, dadurch gekennzeichnet, dass der Bandpass (37) aus der Sekundärwicklung (20) mit ihrer wirksamen Sekundärwicklungsinduktivität und ihrer parasitären Sekundärwicklungskapazität, dem mit der Sekundärwicklung (20) verbundenen ersten Kondensator (30), dem über einen Anschluss (22) dem Kondensator nachgeschalteten Kopplungswiderstand (32), dem mit den Anschlüssen (24, 34) der Sekundärwicklung verbundenen zweiten Kondensator (36) für den zu überprüfenden Wechselstrom oder pulsierenden Gleichstrom und dem spannungsabhängigen, zwischen der Sekundärwicklung (20) und dem ersten Kondensator (30) mit den Anschlüssen (22, 24) verbundenen Dämpfungsglied (26, 28) mit dessen parasitärer Kapazität besteht.

3. Elektronische Schaltung nach Anspruch 1 oder 2, dadurch gekennzeichnet, dass der bipolare Stabilisator (38, 40) einends mit einem Anschluss (34) des Kopplungswiderstandes (32) und andernends mit einem Anschluss (24) der Sekundärwicklung (20), die Anschlüsse (42, 44) des Spannungsvervielfachers (46) mit dem Anschluss (34) des Kopplungswiderstandes (32) und mit dem Anschluss (24) der Sekundärwicklung (20), der Energiespeicher-Kondensator (52) mit den Anschlüssen (48, 50) des Spannungsvervielfachers (46), ein Anschluss (54) des Spannungsdetektors (60) mit dem Anschluss (48) des Spannungsvervielfachers (46) und dem anodischen Eingang (A) des Schaltelementes (70), ein anderer Anschluss (56) des Spannungsdetektors (60) mit einem Anschluss (62) des Magnetauslösers (64), der Kathode einer Freilaufdiode (68) und dem kathodischen Ausgang (K) des Schaltelementes (70), ein Detektorausgang (58) des Spannungsdetektors (60) mit dem Steueranschluss (G) des Schaltelementes (70), und der Anschluss (66) des Magnetauslösers (64) und die Anode der Freilaufdiode (68) mit dem Anschluss (24) der Sekundärwicklung (20) verbunden sind.

4. Elektronische Schaltung nach einem der Ansprüche 1 bis 3, dadurch gekennzeichnet, dass die Sekundärwicklungsinduktivität des Stromwandlers (10) mit ihrer parasitären Sekundärwicklungskapazität und dem ersten Kondensator (30) einen zwischen halber und doppelter Netzfrequenz abgestimmten Parallelschwingkreis bildet.

5. Elektronische Schaltung nach einem der Ansprüche 1 bis 4, dadurch gekennzeichnet, dass der bipolare Spannungsstabilisator (38, 40) und/oder das spannungsabhängige Dämpfungsglied (26, 28) aus antiseriell geschalteten Zehnerdioden, aus einem Varistor, aus einem VDR-Widerstand, aus antiseriell geschalteten, unipolaren Trans-Sorb-Dioden oder aus einer bipolaren Trans-Sorb-Diode besteht.

6. Elektronische Schaltung nach einem der Ansprüche 1 bis 5, dadurch gekennzeichnet, dass der Spannungsvervielfacher (46) ein Spannungsverdoppler oder ein Spannungsvervielfacher nach Villard oder nach Delon/Greinacher, ein Spannungsverdreifacher nach Witka oder ein Spannungsverdoppler für unsymmetrische Wechselspannungen ist.

7. Elektronische Schaltung nach einem der Ansprüche 1 bis 6, dadurch gekennzeichnet, dass der mit der zu überwachenden Spannung versorgte Spannungsdetektor (60) als integrierter Schaltkreis in CMOS-Technik aufgebaut ist, wobei der Detektorausgang (58) beim Erreichen einer festen oder einstellbaren Spannungsschwelle plötzlich seine Ausgangsspannung ändert.

8. Elektronische Schaltung nach einem der Ansprüche 1 bis 7, dadurch gekennzeichnet, dass das Schaltelement (70) aus einem Halbleiterschaltelement, vorzugsweise aus einem am Gate (G) mit einer positiven Spannung gegenüber der Kathode gesteuerten Thyristor, einem komplementären Thyristor, einem programmierbaren, am Gate (G) mit einer negativen Spannung gegenüber der Anode gesteuerten Unijunctiontransistor oder einer Ersatzschaltung aus einem PNP- und/oder einem NPN-Transistor besteht.

9. Elektronische Schaltung nach einem der Ansprüche 1 bis 8, dadurch gekennzeichnet, dass die elektronischen Bausteine auf einer Leiterplatte in SMD-Technik untergebracht sind.

10. Elektronische Schaltung nach einem der Ansprüche 1 bis 8, dadurch gekennzeichnet, dass die Halbleiterbauelemente in einem Chip integriert sind und dieser mit weiteren elektronischen Bauteilen auf einem Träger montiert ist.

## Claims

1. Power-supply-independent electronic circuit for an FI circuit breaker with a fault current detecting transformer (10), where the said circuit as trip delay comprises a band pass (37) formed with the secondary winding (20) of the transformer (10), a rectifier circuit, an energy storage capacitor (52), a threshold switch for the voltage and a magnetic trip (64) discharging the energy storage capacitor (52) and acting on the switch latch (80) of the FI circuit breaker, where the trip delay irrespective of the primary linkage is always greater than the duration of half the period of the power supply to be monitored and has a response current dependent on the frequency of the power supply to be monitored,
characterised in that
the secondary winding (20), a first capacitor (30), a second capacitor (36) and a coupling resistor (32) with the corresponding connections form the band pass (37), the voltage of which is passed via a rectifying voltage multiplier (46) to a discharge circuit consisting of the energy storage capacitor (52), the magnetic trip (64) and a switch element (70), one output of a voltage detector (60) for the preconnected energy storage capacitor (52) is connected with the control connection (G) of a switch element (70) which on activation by the voltage detector (60) discharges the energy storage capacitor (52), where the amplitude of the output voltage of the band pass (37) is limited to a value lying below the response limit of the voltage detector (60) by means of an attenuator (26, 28) connected in the band pass (37) in advance of the first capacitor (30) and/or a bipolar voltage stabiliser (38, 40) connected after the second capacitor (36).

2. Electronic circuit according to claim 1, characterised in that the band pass (37) consists of the secondary winding (20) with its effective secondary winding inductance and its parasitic secondary winding capacitance, the first capacitor (30) connected to the secondary winding (20), the coupling resistor (32) connected via a connection (22) after the capacitor, the second capacitor (36) connected with connections (24, 34) of the secondary winding for the alternating current or pulsating direct current to be tested, and the voltage-dependent attenuator (26, 28) with its parasitic capacitance connected between the secondary winding (20) and the first capacitor (30) with connections (22, 24).

3. Electronic circuit according to claim 1 or 2, characterised in that the bipolar stabiliser (38, 40) is connected at one end with a connection (34) of coupling resistor (32) and at the other with a connection (24) of the secondary winding (20), the connections (42, 44) of the voltage multiplier (46) are connected with connection (34) of the coupling resistor (32) and connection (24) of the secondary winding (20), the energy storage capacitor (52) is connected with connections (48, 50) of the voltage multiplier (46), a connection (54) of the voltage detector (60) is connected with connection (48) of the voltage multiplier (46) and the anode input (A) of the switch element (70), a second connection (56) of the voltage detector (60) is connected with a connection (62) of the magnetic trip (64), with the cathode of a recovery diode (68) and with the cathode output (K) of the switch element (70), a detector output (58) of the voltage detector (60) is connected with the control connection (G) of the switch element (70), and the connection (66) of the magnetic trip (64) and the anode of the recovery diode (68) are connected with connection (24) of the secondary winding (20).

4. Electronic circuit according to any of claims 1 to 3, characterised in that the secondary winding inductance of the transformer (10), with its parasitic secondary winding capacitance, and the first capacitor (30), form a parallel oscillation circuit matched between half and double the power supply frequency.

5. Electronic circuit according to any of claims 1 to 4, characterised in that the bipolar voltage stabiliser (38, 40) and/or the voltage dependent attenuator (26, 28) consists of anti-serially wired Zener diodes, a varistor, a VDR resistor, anti-serially wired unipolar Trans-sorb diodes or a bipolar Trans-sorb diode.

6. Electronic circuit according to any of claims 1 to 5, characterised in that the voltage multiplier (46) is a voltage doubler or voltage tripler of Villard or Delon/Greinacher, a voltage tripler of Witka or a voltage doubler for asymmetric alternating voltages.

7. Electronic circuit according to any of claims 1 to 6, characterised in that the voltage detector (60) supplied with the voltage to be monitored is structured as an integrated circuit in CMOS technology, where the detector output (58) suddenly changes its output voltage when reaching a fixed or adjustable voltage threshold.

8. Electronic circuit according to any of claims 1 to 7, characterised in that the switch element (70) consists of a semiconductor switch element, preferably a thyristor controlled at gate (G) with a positive voltage to the cathode, a complementary thyristor, a programmable unijunction transistor controlled at gate (G) with a negative voltage to the anode, or a replacement circuit of a PNP and/or NPN transistor.

9. Electronic circuit according to any of claims 1 to 8, characterised in that the electronic modules are fitted on a circuit board in SMD technology.

10. Electronic circuit according to any of claims 1 to 8, characterised in the semiconductor elements are integrated in a chip and mounted on a carrier together with further electronic components.

## Revendications

1. Circuit électronique indépendant de la tension du réseau, destiné à un disjoncteur de protection à courant homopolaire comprenant un transformateur de courant (10) détectant les courants de défaut, ledit circuit comprenant, en vue de la temporisation du déclenchement, un élément passe-bande (37) formé au moyen de l'enroulement secondaire (20) du transformateur de courant (10), un circuit redresseur, un condensateur (52) de stockge d'énergie, un interrupteur à fonction de seuil pour la tension et un déclencheur magnétique (64) qui décharge le condensateur (52) de stockage d'énergie et qui agit sur le verrou de maintien (80) du disjoncteur de protection à courant homopolaire, la temporisation du déclenchement étant, de manière indépendante de la circulation de courant dans le primaire, toujours plus élevée que la demie période du réseau à surveiller et présentant un courant de déclenchement qui dépend de la fréquence du réseau à surveiller,
caractérisé en ce que
l'enroulement secondaire (20), un premier condensateur (30), un deuxième condensateur (36) et une résistance de couplage (32) comprenant des bornes correspondantes forment l'élément passe-bande (37) dont la tension est transmise, par l'intermédiaire d'un multiplicateur de tension à redressement (46), à un circuit de décharge constitué du condensateur de stockage d'énergie (52), du déclencheur magnétique (64) et d'un élément de commutation (70), en ce qu'une sortie d'un détecteur de tension (60) destiné au condensateur de stockage d'énergie (52) branché en aval est relié à la borne de commande (G) d'un élément de commutation (70) qui, lorsqu'il est commandé par le détecteur de tension (60), décharge le condensateur de stockage d'énergie (52), l'amplitude de la tension de sortie de l'élément passe-bande étant limitée, au moyen d'un élément d'amortissement (26, 28) branché dans l'élément passe-bande (37) en aval du premier condensateur (30) et/ou d'un stabilisateur de tension bipolaire (38, 40) branché en amont du deuxième condensateur (36), à une valeur se trouvant en dessous de la limite de fonctionnement du détecteur de tension (60).

2. Circuit électronique selon la revendication 1, caractérisé en ce que l'élément passe-bande (37) est constitué de l'enroulement secondaire (20) avec son inductance efficace d'enroulement secondaire et sa capacité parasite d'enroulement secondaire, du premier condensateur (30) relié à l'enroulement secondaire (20), de la résistance de couplage (32) branchée en amont du condensateur par l'intermédiaire d'une borne (22), du deuxième condensateur (36) relié aux bornes (24, 34) de l'enroulement secondaire destiné au courant alternatif ou au courant continu pulsé à surveiller et de l'élément d'amortissement (26, 28), avec sa capacité parasite, qui est indépendant de la tension et relié aux bornes (22, 24) se trouvant entre l'enroulement secondaire (20) et le premier condensateur (30).

3. Circuit électronique selon la revendication 1 ou 2, caractérisé en ce que le stabilisateur bipolaire (38, 40) est relié, d'une part, à une borne (34) de résistance de couplage (32) et, d'autre part, à une borne (24) de l'enroulement secondaire (20), en ce que les bornes (42, 44) du multiplicateur de tension (46) sont reliées à la borne (34) de résistance de couplage (32) et à la borne (24) de l'enroulement secondaire (20), en ce que le condensateur de stockage d'énergie (52) est relié aux bornes (48, 50) du multiplicateur de tension (46), en ce qu'une borne (54) du détecteur de tension (60) est reliée à la borne (48) du multiplicateur de tension (46) et à l'entrée d'anode (A) de l'élément de commutation (70), en ce qu'une autre borne (56) du détecteur de tension (60) est reliée à une borne (62) du déclencheur magnétique (64), à la cathode d'une diode de roue libre (68) et à la sortie de cathode(K) de l'élément de commutation (70), en ce qu'une sortie de détection (58) du détecteur de tension (60) est reliée à la borne de commande (G) de l'élément de commutation (70) et en ce que la borne (66) du déclencheur magnétique (64) et l'anode de la diode de roue libre (68) sont reliées à la borne (24) de l'enroulement secondaire (20).

4. Circuit électronique selon l'une quelconque des revendications 1 à 3, caractérisé en ce que l'inductance de l'enroulement secondaire du transformateur de courant (10) forme, avec sa capacité parasite d'enroulement secondaire et le premier condensateur (30), un circuit à résonance parallèle adapté à une fréquence comprise entre la moitié et le double de la fréquence du réseau.

5. Circuit électronique selon l'une quelconque des revendications 1 à 4, caractérisé en ce que le stabilisateur de tension bipolaire (38, 40) et/ou l'élément d'amortissement (26, 28) indépendant de la tension est constitué de diodes Zener branchées en série et en opposition, d'un varistor, d'une varistance VDR, de diodes d'arrêt (suppressor diode) unipolaires branchées en série et en opposition ou d'une diode d'arrêt (suppressor diode) bipolaire.

6. Circuit électronique selon l'une quelconque des revendications 1 à 5, caractérisé en ce que le multiplicateur de tension (46) est un doubleur de tension ou un multiplicateur de tension du type Villard ou du type Delon/Greinacher, un tripleur de tension du type Witka ou un doubleur de tension pour tensions alternatives asymétriques.

7. Circuit électronique selon l'une quelconque des revendications 1 à 6, caractérisé en ce que le détecteur de tension (60) alimenté par la tension à surveiller est réalisé sous la forme d'un circuit intégré selon la technique CMOS, la sortie (58) du détecteur modifiant brusquement sa tension de sortie lorsque l'on atteint un seuil de tension fixe ou réglable.

8. Circuit électronique selon l'une quelconque des revendications 1 à 7, caractérisé en ce que l'élément de commutation (70) est constitué d'un élément semi-conducteur, de préférence d'un thyristor commandé par la présence sur sa gâchette (G) d'une tension positive par rapport à la cathode, d'un thyristor complémentaire, d'un transistor unijonction programmable commandé par la présence sur sa gâchette (G) d'une tension positive par rapport à l'anode ou d'un circuit de remplacement constitué d'un transistor de type PNP ou NPN.

9. Circuit électronique selon l'une quelconque des revendications 1 à 8, caractérisé en ce que les composants électroniques sont insérés sur une carte de circuit imprimé selon la technologie des particules montées en surface.

10. Circuit électronique selon l'une quelconque des revendications 1 à 8, caractérisé en ce que les éléments semi-conducteurs sont intégrés dans une microplaquette et en ce que celle-ci est montée avec d'autres composants électroniques sur un support.
